# EUROPEAN PATENT SPECIFICATION

(11) **EP 1 882 606 B1**
(45) Date of publication and mention of the grant of the patent: **16.11.2011**
(21) Application number: 06019523.7
(22) Date of filing: 19.09.2006
(51) Int. Cl.: B60J 7/12, B60J 7/16, B60J 7/10

(54) **Convertible vehicle body**
Cabriolet-Fahrzeug
Véhicule convertible

(30) Priority: 29.07.2006 EP 06015841
(43) Date of publication of application: 30.01.2008
(73) Proprietor: GM Global Technology Operations LLC, Detroit, MI 48265-3000 (US)
(72) Inventor: Czornyj, Taras, 717 63 Göterborg (SE); Johansson, Martin, 468 34 Vänersborg (SE)
(74) Representative: Daniel, Ulrich W.P.

(56) References cited:
- WO-A-03/076222
- WO-A2-2005/032867
- DE-A1- 10 254 366
- DE-U1- 20 107 371

## Description

The present invention relates to a convertible vehicle body, in which a passenger compartment is delimited by side windows, a rear window, two movable rear pillars which in a closed configuration of the vehicle body fill a gap between the rear window and each of said side windows, and a roof which in the closed configuration covers said passenger compartment, and in which a storage section is provided for receiving the roof when the vehicle body is in an open configuration.

A vehicle body of this type is disclosed in DE 199 48 666 A1. In this prior art vehicle body, the rear window is displaceable, enabling the vehicle body to assume two different open configurations, a first one in which the rear window is concealed completely within the vehicle body, similar to a conventional cabriolet body, and a second one in which the position of the rear window is the same as in the closed configuration. In this second open configuration, the rear window provides some airstream protection for the rear portion of the passenger compartment, a feature which is particularly desirable in a vehicle having front and rear seats, in order to increase the comfort of rear seat passengers when driving in an open configuration.

However, the airstream protection provided by the rear window can be nothing but incomplete, since in any open configuration, the rear pillars which carry the roof are folded backwards together with the roof they carry, so that a gap exists at either side of the rear window in the second open configuration through which the rear portion of the passenger compartment may be exposed to draught.

DE 20107371 U discloses a convertible vehicle body in which a passenger compartment is delimited by side windows, a movable rear window, a rear roof portion embodied as "Targa"-roof frame having two side portions and a transverse portion, wherein the side portions of the rear roof portion in a closed configuration of the vehicle body fill a gap between the rear window and each of the side windows. In the "Targa"-roof frame, the transverse portion is an integral part thereof.

The object of the present invention therefore is to provide an improved vehicle body which is convertible between a closed configuration and at least two open configurations, one of which is similar to a conventional cabriolet configuration, and the other of which provides improved airstream protection for the rear portion of the vehicle body's passenger compartment.

In a convertible vehicle body in which a passenger compartment is delimited by side windows, a moveable rear window, two moveable rear pillars which in a closed configuration of the vehicle body fill a gap between the rear window and each of said side windows, and a roof which in the closed configuration covers said passenger compartment, and in which a storage section is provided for receiving the roof when the vehicle body is in an open configuration, the vehicle body having a first open configuration in which in which the position of said rear window is essentially the same as in the closed configuration and a second open configuration in which the position of said rear window is lower than in the first open configuration, this object is achieved by the fact that the rear columns fill said gaps also in the first open configuration. I.e. the vehicle body of the invention has a first open configuration in which the rear window is raised and gaps between it and the side windows are filled by the rear columns, and a second, cabriolet-like open configuration in which the rear window is lowered and the gaps are open.

For opening and closing the roof, the rear pillars are displaceable into a position in which the gaps are open, and the roof is connected to a lower body portion by arms which in the closed configuration are located within the passenger compartment and which are movable into the open configuration through said open gaps.

For guiding the movement of the roof between the open and closed configurations, each arm is preferably coupled to the roof by a first joint and to the lower body portion by a second joint, the joints having axes extending transversally with the respect to the vehicle body, the first joints being spaced apart in the longitudinal direction of the vehicle body, and the second joints also being spaced apart in said longitudinal direction.

In the closed configuration, the rear pillars support the roof, but for moving into one of the open configurations, the roof is detachable from the rear pillars.

In case of a roof which comprises a main segment supported by said arms and a rear segment which is moveably connected to the main segment, such additional support by the rear pillars is particularly desirable for the rear segment.

The rear segment is preferably moveable into a position in which it overlaps with said main segment, in order for the segments to form a compact unit which can be easily lifted away from the passenger compartment without a risk of interference with other parts of the vehicle body.

The moveable connection between main and rear segments preferably is of a pivoting type.

The main segment may further be moveably connected to a front segment which, in the closed configuration, extends to a front window of the vehicle body. Thus, the unit which is to be lifted away from the passenger compartment can be made still more compact.

It is further preferred that the rear pillars be moveable into an idle position in which the rear pillars are concealed within the vehicle body, so that when the vehicle is moving while the rear pillars are not in their roof supporting position, they do not form an obstacle to the headwind, which might cause undesirable noise and fuel consumption.

The idle position of the pillars may conveniently be inside a boot of the vehicle body.

Certainly, the storage section for the roof may be inside the boot. In order to facilitate the movement of the roof between its position on top of the passenger compartment and the storage section and/or the movements of the pillars between their roof supporting / gap filling and idle positions, a boot lid of said boot is preferably pivotable about an axis adjacent to a rear edge of said boot lid.

According to a preferred embodiment, the rear pillars may be mounted on the boot lid , so that by merely opening the boot lid, the rear pillars will be moved away from the gaps.

Further features and advantages of the invention become apparent from the subsequent description of embodiments thereof referring to the appended drawings.
- Fig. 1: is a side view of a motor vehicle according to the present invention, with its roof in a closed configuration;
- Fig. 2: illustrates the vehicle with its roof in an intermediate stage between closed and open configurations;
- Fig. 3: is a perspective view of the roof structure, without tarpaulin;
- Fig. 4: is a side view of the vehicle, in which segments of the roof are folded one above the other, and the trunk lid is open in order to receive the folded roof;
- Fig 5: illustrates the vehicle with the folded roof placed in the trunk;
- Fig. 6: illustrates the vehicle in a first open configuration in which the pillars are in a support position;
- Fig. 7: is a side view of the vehicle illustrating the process of moving the pillars into their idle position;
- Fig.8: illustrates a configuration of the vehicle in which the pillars are in the idle position with respect to the boot lid, and the boot lid is open;
- Fig. 9: illustrates a second open configuration of the vehicle, in which the pillars are in their idle position.
- Fig. 10: is a side view of the vehicle in an open configuration according to a second embodiment of the invention;
- Fig. 11: is a side view analogous to Fig. 9 according to a third embodiment; and
- Fig. 12: is a side view analogous to Fig. 9 according to a fourth embodiment.

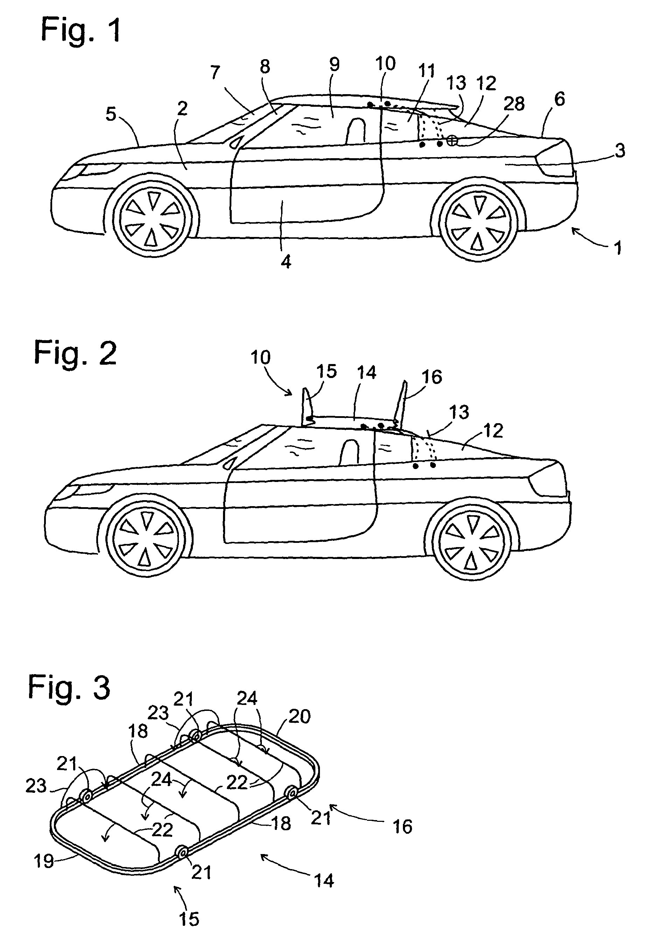

Fig. 1 is a side view of a vehicle body according to the present invention, illustrating a closed configuration. The vehicle body has a lower body portion 1 comprising front and rear wings 2, 3, doors 4, an engine bonnet 5 and a boot lid 6. A windscreen 7 is held between A-pillars 8. Each door 4 carries a window pane 9 which is displaceable between an elevated position in which its upper rim is in contact with a roof 10 and a withdrawn position in which the window pane 9 is concealed within the body of door 4. Similarly, a window pane 11 mounted at rear wing 3 is displaceable between an elevated position, shown, and a withdrawn position inside rear wing 3. To the rear of window pane 11, there are two C-pillars 12. The vehicle body further has a rear window 13 which in the perspective of Fig. 1 is concealed by the C-pillar 12 which faces the viewer, so that it is represented by a phantom line only. It is noted that the C-pillars 12 extend over a considerable length in the longitudinal direction of the vehicle, and that they extend to the rear far beyond the rear window 13, conferring to the vehicle body a hatchback silhouette, although the steep orientation of the rear window is that of a notchback.

A- and C-pillars 8, 12 support roof 10 but are not permanently attached to it. A latch or the like may be provided in order to temporarily lock the roof 10 to the A- and C-pillars 8, 12.

As can be seen in Fig. 2, the roof 10 is formed of three segments, a main segment 14 in the centre and front and rear segments 15, 16, which, in the embodiment shown, are foldably connected to the main segment 14. In an alternative embodiment, the front and rear segments might be linearly displaceable with respect to the main segment, e. g. by means of guiding rails or the like, in order to bring them into a stacked configuration.

A general structure of the roof 10 having the foldable segments 14, 15, 16 is illustrated in Fig. 3. A support structure of the roof 10 comprises two rigid lateral metal beams 18 the ends of which are connected to arc-shaped front and rear beams 19, 20 by hinges 21. In the configuration shown, beams 18, 19, 20 essentially lie in a same plane and form a roughly rectangular frame. A tarpaulin, not shown, has its edges fixed to this rectangular frame. The tarpaulin is further supported by arc-shaped webs 22, which extend between the two longitudinal beams 18 or between parallel end portions of the front beam 19 or the rear beam 20. In the configuration shown, the webs 22 stand upright so as to keep the tarpaulin under tension. The webs 22 are rotatably held at beams 18, 19, 20, and they are coupled to the hinges 21 such that when the front and rear beams 19, 20 are folded on top of the longitudinal beams 18, as indicated by arrows 23, the webs 21 will rotate towards the plane of the beams 18, 19, 20 holding them as illustrated by arrows 24, causing the tarpaulin to slacken and enabling the front and rear beams 19, 20 to lie flat on the longitudinal beams 18.

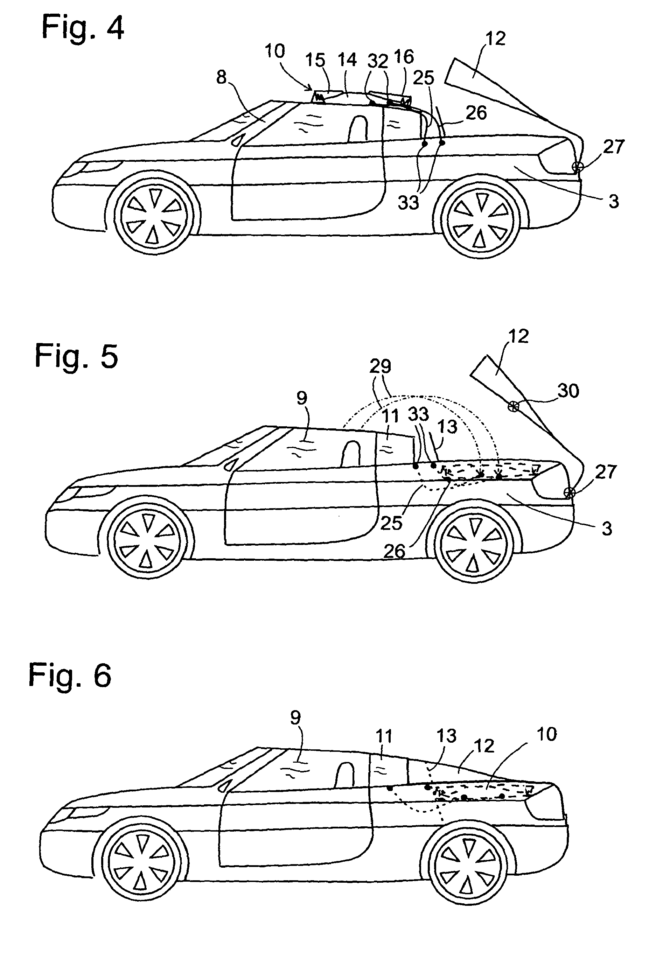

Fig. 4 illustrates the configuration of the vehicle when the front and rear beams 19, 20 lie flat on the longitudinal beams 18 of the main segment 14. The roof 10 is folded into a compact package. This package is no longer supported by any of the A- and C-Pillars 8, 12, but exclusively by two pairs of arcuate webs 25, 26, which, as can be seen in Fig. 1, extend near inner sides of the C-pillars 12 while the roof 10 is closed and are connected to the longitudinal beams 18 of the main segment 14 by first articulated joints 32, on the one hand, and to an appropriate support of the vehicle frame 1, on the other, by second articulated joints 33. The joints 32, 33 have axes extending in the transversal direction of the vehicle body.

In Fig. 4, the boot lid 6 is opened by pivoting it around an axis 27 located near a rear edge of the boot lid 6. For completeness, it should be noted that the boot lid 6 is also pivotable around an axis 28 (see Fig. 1) located near its front edge, for loading and unloading the boot. Since this kind of operation of the boot lid 6 is familiar to the skilled person, it is not shown in the drawing.

By turning the webs 25, 26, the folded roof 10 is swung into the boot, as indicated by arrows 29 in Fig. 5. Since the quadrangle formed by the four axes of the joints 32, 33 has an essentially rhomboid shape, the folded roof rotates only little when it is swung into the boot and assumes an orientation inside the boot in which it is parallel to the boot lid 6 in its closed position. When the roof 10 has been placed in the boot, the boot lid 6 is closed again, and the rear window 13 is slightly moved down, so that its upper edge becomes flush with that of the C-pillars 12, yielding the configuration of Fig. 6. In this configuration, the passenger compartment is still delimited by side and rear windows 9, 11, 13 and the C-pillars 12, but the roof 10 is completely removed.

It should be noted that although the C-pillars 12 are shown to be mounted to the boot lid 6 in Fig. 4 and 5, a configuration similar to that of Fig. 6 might also be achieved in case of C-pillars mounted to the rear wings 3.

According to a preferred embodiment, the C-pillars 12 are not fixed to the boot lid 6, but are rotatable with respect to the boot lid 6 around an axis which extends in the transversal direction of the vehicle body and is denoted 30 in Fig. 5.

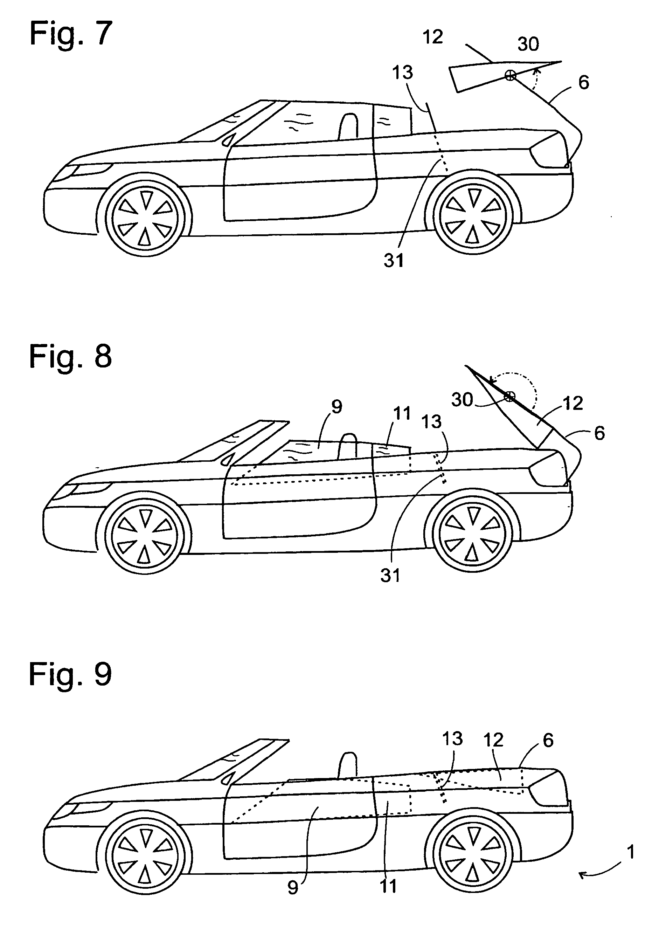

Fig. 7 illustrates an intermediate configuration which is reached if, starting from the configuration of Fig. 5, the C-pillars 12 are rotated around axis 30. When the C-pillars 12 are rotated by approximately 180°, as shown in Fig. 8, they are located entirely underneath the boot lid 6, and a bottom side of the C-pillars 12 is flush with the boot lid 6. Window panes 9, 11 are lowered to an intermediate position, and the rear window 13 is withdrawn completely into the lower body portion 1. In its withdrawn position, the rear window 13 may conveniently be located inside the boot, e. g. adjacent to a front wall 31 of the boot. By closing the boot lid 6 and lowering further the window panes 9, 11, a second open configuration illustrated in Fig. 9 is obtained, in which not only the roof 10 but also the window panes 9, 11 and the C-pillars 12 have disappeared inside the vehicle frame 1, yielding a vehicle body of a classical cabriolet type.

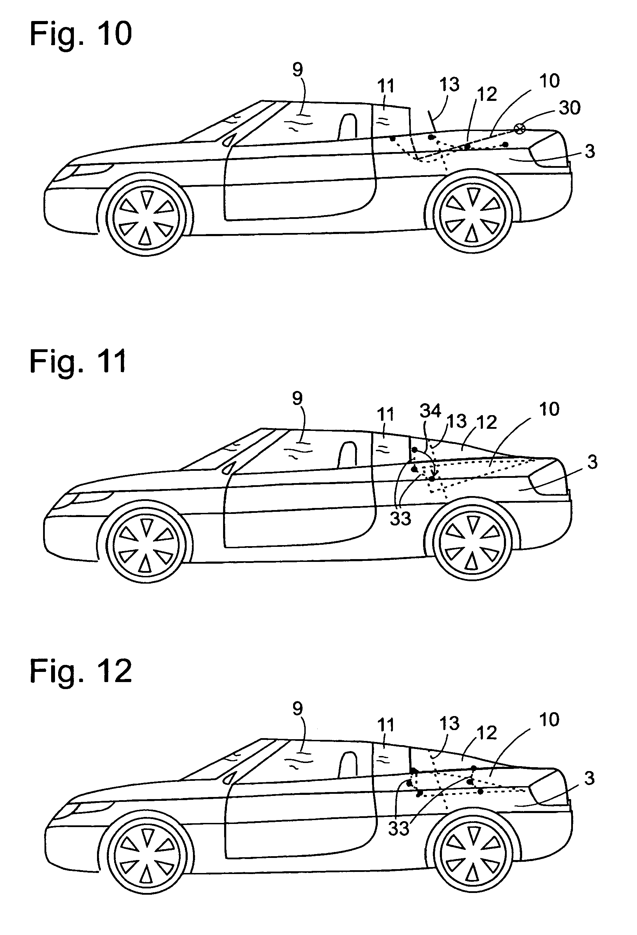

Fig. 10 is a side view of a vehicle body according to a second embodiment. It differs from the embodiment of Figs 1 to 9 in that the C-pillars 12 are not mounted on the boot lid, but, quite conventionally, on rear wings 3. The C-pillars 12 are rotatable around an axis 30 near their rear ends between an upright position in which they fill a gap between the rear window pane 13 and side window panes 11, as shown in Fig. 2, and an idle position, as shown in Fig. 10, in which they are hidden in the vehicle boot, and in which a cabriolet-like appearance of the vehicle body can be obtained by lowering the window panes 11, 13.

In an alternative embodiment shown in Fig. 11, a rear end of each C-pillar 12 is slidably held in a guiding rail, not shown, fixed to an inner side of the rear wings, and a front end of each C-pillar 12 is displaceable between a gap filling position between window panes 11, 13 in which it is supported by a substantially vertically oriented connecting rod 33 and an idle position by turning the connecting rod 33 as indicated by arrow 34.

In the embodiment of Fig. 12, there are two connecting rods 33 forming a trapezoid linkage between C-pillar 12 and rear wing 3. By rotating the two rods 33, the C-pillar 12 is transferred from its gap filling position to the idle position inside the boot and back again.

### Reference numerals

- 01: frame
- 02: front wing
- 03: rear wing
- 04: door
- 05: engine bonnet
- 06: boot lid
- 07: windscreen
- 08: A-pillar
- 09: window pane
- 10: roof
- 11: window pane
- 12: B-pillar
- 13: rear window
- 14: main segment
- 15: front segment
- 16: rear segment
- 17: roof frame
- 18: beam (longitudinal)
- 19: front beam
- 20: rear beam
- 21: hinge
- 22: web
- 23: arrow
- 24: arrow
- 25: web
- 26: web
- 27: axis
- 28: axis
- 29: arrow
- 30: axis
- 31: front wall (of boot)
- 32: articulated joints

## Claims

1. A convertible vehicle body in which a passenger compartment is delimited by side windows (11), a movable rear window (13), two movable rear pillars (12) which in a closed configuration of the vehicle body fill a gap between the rear window (13) and each of said side windows (11), and a roof (10) which in the closed configuration covers said passenger compartment, and in which a storage section is provided for receiving the roof (10) when the vehicle body is in an open configuration, the vehicle body having a first open configuration in which the position of said rear window (13) is essentially the same as in the closed configuration and a second open configuration in which the position of said rear window (13) is lower than in the first open configuration, wherein:
- the rear pillars (12) fill said gaps also in the first open configuration;
- the rear pillars (12) are displaceable into a position in which said gaps are open, and wherein the roof (10) is connected to a lower body portion (1) by arms (25, 26) which in the closed configuration are located within the passenger compartment and which are movable into the open configuration through said open gaps;
- the rear pillars (12) support the roof in the closed configuration and wherein the roof is detachable from the rear pillars (12) for moving into one of the open configurations, and
- the roof comprises a main segment (14) supported by said arms (25, 26) and a rear segment (16) which is movably connected to the main segment (14), wherein the rear pillars (12), in the closed configuration, support said rear segment (16).

2. The vehicle body of claim 1, **characterised in that** each arm (25, 26) is coupled to the roof (10) by a first joint (32) and to the lower body portion (1) by a second joint (33), the joints (32, 33) having axes extending transversally with respect to the vehicle body, and that the first joints (32) are spaced apart in the longitudinal direction of the vehicle body and that the second joints (33) are spaced apart in said longitudinal direction.

3. The vehicle body of claim 1, wherein said rear segment (16) is movable into a position in which it overlaps with said main segment (14).

4. The vehicle body of claim 1 or 3, wherein said main and rear segments (14, 16) are pivotably connected.

5. The vehicle body of one of claims 1 to 4, wherein the main segment (14) is movably connected to a front segment (15) which, in the closed configuration, extends to a front window (7) of the vehicle body.

6. The vehicle body of any of the preceding claims, wherein the rear pillars (12) are movable into an idle position in which they are concealed within the vehicle body.

7. The vehicle body of claim 6, wherein the idle position of the rear pillars (12) is inside a boot of the vehicle body.

8. The vehicle body of any of the preceding claims, wherein the storage section is inside a boot of the vehicle body.

9. The vehicle body of claim 7 or 8, wherein the boot has a boot lid (6) which is pivotable about an axis (27) adjacent to a rear edge of said boot lid (6).

10. The vehicle body of claim 7 and claim 8, wherein the pillars (12) are mounted on the boot lid (6).

11. The vehicle body of one of the preceding claims, wherein the rear pillars (12) are pivotable between their gap filling position and their idle position.

## Patentansprüche

1. Aufbau eines Cabriolet-Fahrzeugs, in dem ein Fahrgastraum begrenzt wird durch Seitenfenster (11), ein bewegliches Heckfenster (13), zwei bewegliche hintere Säulen (12), die in einer geschlossenen Konfiguration des Fahrzeugaufbaus einen Zwischenraum zwischen dem Heckfenster (13) und dem jeweiligen Seitenfenster (11) ausfüllen, und ein Dach (10), das in der geschlossenen Konfiguration den Fahrgastraum bedeckt, und in dem ein Aufbewahrungsabschnitt vorgesehen ist, um das Dach (10) aufzunehmen, wenn sich der Fahrzeugaufbau in einer offenen Konfiguration befindet, wobei der Fahrzeugaufbau aufweist: eine erste offene Konfiguration, in der die Position des Heckfensters (13) im Wesentlichen die gleiche ist wie in der geschlossenen Konfiguration, und eine zweite offene Konfiguration, in der die Position des Heckfensters (13) niedriger ist als in der ersten offenen Konfiguration, wobei:
- die hinteren Säulen (12) die Zwischenräume auch in der ersten offenen Konfiguration ausfüllen;
- die hinteren Säulen (12) in eine Position gebracht werden können, in der die Zwischenräume offen sind, und wobei das Dach (10) mit einem unteren Aufbauteil (1) durch Arme (25, 26) verbunden ist, die in der geschlossenen Konfiguration im Fahrgastraum angeordnet sind und die durch die offenen Zwischenräume in die offene Konfiguration gebracht werden können;
- die hinteren Säulen (12) das Dach in der geschlossenen Konfiguration tragen und das Dach von den hinteren Säulen (12) gelöst werden kann, um in eine der offenen Konfigurationen gebracht zu werden, und
- das Dach umfasst: ein Hauptsegment (14), das von den Armen (25, 26) getragen wird, und ein hinteres Segment (16), das beweglich mit dem Hauptsegment (14) verbunden ist, wobei die hinteren Säulen (12) in der geschlossenen Konfiguration das hintere Segment (16) tragen.

2. Fahrzeugaufbau nach Anspruch 1, **dadurch gekennzeichnet, dass** jeder Arm (25, 26) mit dem Dach (10) durch ein erstes Anschlussstück (32) und mit dem unteren Aufbauteil (1) durch ein zweites Anschlussstück (33) verbunden ist, wobei die Anschlussstücke (32, 33) Achsen aufweisen, die sich in Bezug auf den Fahrzeugaufbau quer erstrecken, und dass die ersten Anschlussstücke (32) in Längsrichtung des Fahrzeugaufbaus voneinander beabstandet sind und dass die zweiten Anschlussstücke (33) in dieser Längsrichtung voneinander beabstandet sind.

3. Fahrzeugaufbau nach Anspruch 1, wobei das hintere Segment (16) in eine Position bewegt werden kann, in der es sich mit dem Hauptsegment (14) überlappt.

4. Fahrzeugaufbau nach Anspruch 1 oder 3, wobei das Hauptsegment und das hintere Segment (14, 16) schwenkbar miteinander verbunden sind.

5. Fahrzeugaufbau nach einem der Ansprüche 1 bis 4, wobei das Hauptsegment (14) beweglich mit einem vorderen Segment (15) verbunden ist, das sich in der geschlossenen Konfiguration zu einer Frontscheibe (7) des Fahrzeugaufbaus erstreckt.

6. Fahrzeugaufbau nach einem der vorhergehenden Ansprüche, wobei die hinteren Säulen (12) in eine Ruheposition bewegt werden können, in der sie im Fahrzeugaufbau versenkt sind.

7. Fahrzeugaufbau nach Anspruch 6, wobei sich die Ruheposition der hinteren Säulen (12) in einem Kofferraum des Fahrzeugaufbaus befindet.

8. Fahrzeugaufbau nach einem der vorhergehenden Ansprüche, wobei sich der Aufbewahrungsabschnitt in einem Kofferraum des Fahrzeugaufbaus befindet.

9. Fahrzeugaufbau nach Anspruch 7 oder 8, wobei der Kofferraum einen Kofferraumdeckel (6) aufweist, der um eine Achse (27) schwenkbar ist, die an einen hinteren Rand des Kofferraumdeckels (6) angrenzt.

10. Fahrzeugaufbau nach Anspruch 7 und Anspruch 8, wobei die Säulen (12) am Kofferraumdeckel (6) montiert sind.

11. Fahrzeugaufbau nach einem der vorhergehenden Ansprüche, wobei die hinteren Säulen (12) zwischen ihrer Zwischenraumfüllposition und ihrer Ruheposition schwenkbar sind.

## Revendications

1. Carrosserie de véhicule convertible dans laquelle un habitacle est délimité par une fenêtre latérale (11), une fenêtre arrière mobile (13), deux montants arrière mobiles (12) qui, dans une configuration fermée de la carrosserie de véhicule, remplissent l'espace entre la fenêtre arrière (13) et chacune desdites fenêtres latérales (11), et un toit (10) qui, dans la configuration fermée, couvre ledit habitacle, et dans lequel une partie de rangement est prévue pour recevoir le toit (10) quand la carrosserie de véhicule est dans une configuration ouverte, la carrosserie du véhicule ayant une première configuration ouverte dans laquelle la position de ladite fenêtre arrière (13) est sensiblement la même que dans la configuration fermée et une deuxième configuration ouverte dans laquelle la position de ladite fenêtre arrière (13) est plus basse que dans la première configuration ouverte, dans laquelle :
- les montants arrière (12) remplissent aussi lesdits espaces dans la première configuration ouverte ;
- les montants arrière (12) peuvent être déplacés dans une position dans laquelle lesdits espaces sont ouverts, et dans laquelle le toit (10) est relié à une partie inférieure de carrosserie (1) par des bras (25, 26) qui, dans la position fermée, se trouvent à l'intérieur de l'habitacle et qui peuvent se déplacer vers la configuration ouverte à travers lesdits espaces ;
- les montants arrière (12) supportent le toit dans la configuration fermée, le toit pouvant se détacher des montants arrière (12) pour venir dans l'une des configurations ouvertes ; et
- le toit comprend un segment principal (14) supporté par lesdits bras (25, 26) et un segment arrière (16) qui est relié de façon mobile au segment principal (14), les montants arrière (12) supportant ledit segment arrière (16) dans la configuration fermée.

2. Carrosserie de véhicule selon la revendication 1, **caractérisée en ce que** chaque bras (25, 26) est couplé au toit (10) par une première articulation (32) et à la partie inférieure de carrosserie (1) par une deuxième articulation (33), les articulations (32, 33) ayant des axes qui s'étendent transversalement par rapport à la carrosserie de véhicule, et **en ce que** les premières articulations (32) sont espacées dans le sens longitudinal de la carrosserie de véhicule et **en ce que** les deuxièmes articulations (33) sont espacées dans ledit sens longitudinal.

3. Carrosserie de véhicule selon la revendication 1, dans laquelle ledit segment arrière (16) peut se déplacer dans une position dans laquelle il se chevauche avec ledit segment principal (14).

4. Carrosserie de véhicule selon la revendication 1 ou 3, dans laquelle lesdits segments arrière et principal (14, 16) sont reliés de façon pivotante.

5. Carrosserie de véhicule selon l'une des revendications 1 à 4, dans laquelle le segment principal (14) est relié de manière mobile à un segment avant (15) qui, dans la configuration fermée, s'étend jusqu'à une fenêtre avant (7) de la carrosserie de véhicule.

6. Carrosserie de véhicule selon l'une des revendications précédentes, dans laquelle les montants arrière (12) peuvent se déplacer dans une position de repos dans laquelle ils sont cachés à l'intérieur de la carrosserie de véhicule.

7. Carrosserie de véhicule selon la revendication 6, dans laquelle la position de repos des montants arrière (12) se trouve à l'intérieur d'un coffre de la carrosserie de véhicule.

8. Carrosserie de véhicule selon l'une des revendications précédentes, dans laquelle la partie de rangement se trouve à l'intérieur d'un coffre de la carrosserie de véhicule.

9. Carrosserie de véhicule selon la revendication 7 ou 8, dans laquelle le coffre possède un couvercle de coffre (6) qui peut pivoter autour d'un axe (27) adjacent à un bord arrière dudit couvercle de coffre (6).

10. Carrosserie de véhicule selon les revendications 7 et 8, dans laquelle les montants (12) sont montés sur le couvercle de coffre (6).

11. Carrosserie de véhicule selon l'une des revendications précédentes, dans laquelle les montants arrière (12) peuvent pivoter entre leur position remplissant l'espace et leur position de repos.
